# EUROPEAN PATENT APPLICATION

(11) **EP 3 035 216 A1**
(43) Date of publication of application: **22.06.2016**
(21) Application number: 15200606.0
(22) Date of filing: 16.12.2015
(51) Int. Cl.: G06F 17/30

(54) **CLOUD BURSTING A DATABASE**

(30) Priority: 17.12.2014 US 201414573247
(71) Applicant: Openwave Mobility, Inc., Redwood City, CA 94063 (US)
(72) Inventor: DANI, Manoj, Sunnyvale, CA California 94086 (US)
(74) Representative: EIP

(57) **Abstract**

Methods and a computing node for cloud bursting a first instance of a database stored in a computing node, to a second instance of the database instantiated in a cloud computing node are described. A request for a data object is received at the second instance, a determination whether a local copy of the requested data object is stored in the second instance is made and, in response to determining that a local copy of the requested data object is not stored in the second instance, a request for the data object is sent from the second instance to the first instance. The second instance receives a copy of the requested data object and stores the copy of the requested data object in the second instance. This enables near-instant cloud bursting of the database without having to wait for the entire contents of the first instance to be migrated to the second instance.

## Description

### Technical Field

The present invention relates to cloud bursting a database.

### Background

A database is an organized collection of data usually stored in digital form. There are many database designs and implementations, but the general concept common to all is to be able to store, update, and/or retrieve data objects from the database. Databases generally organize information in the forms of tables and records or entries. Each record or entry may have multiple fields or "attributes" with each attribute having a variety of possible values.

Databases may be implemented in a cloud environment in which resources, such as network bandwidth, memory, storage, processing capability, applications, virtual machines, or services, are shared. Maintaining a private cloud infrastructure that is operated for a single organisation requires a significant level of capital investment and may have a significant physical footprint, requiring allocations of space, hardware, and environmental controls. Such assets have to be maintained and/or replaced periodically, resulting in additional operating costs. Since increasing the amount of resources available within a private cloud requires installation of additional physical equipment, maintaining a private cloud requires the owner of the cloud to carefully evaluate the amount of resources it requires. If too little capacity is provided the users of the database will have a poor user experience. Excess capacity however, is an unnecessary additional cost.

To avoid the need for a database owner to procure and maintain resource levels to cope with peaks in demand that are otherwise in excess of what is required during periods of relatively low demand, it is known to utilise so-called public clouds. Public clouds comprise resources available for example on a pay-per-usage basis. An owner of a database stored and managed in a private cloud can migrate the database to a public cloud having higher levels of resources, during peak times. This is commonly referred to as cloud bursting.

### Summary

According to a first aspect, there is provided a method of cloud bursting a first instance of a database stored in a computing node, to a second instance of the database instantiated in a cloud computing node, the method comprising:
receiving, at the second instance, a request for a data object;
determining whether a local copy of the requested data object is stored in the second instance;
in response to determining that a local copy of the requested data object is not stored in the second instance, sending from the second instance to the first instance a request for the requested data object;
receiving, at the second instance, a copy of the requested data object; and
storing the copy of the requested data object in the second instance.

In some embodiments, the method comprises returning the data object from the first instance in response to the request.

In some embodiments, the second instance of the database opens a data connection with the first instance of the database, the data connection being for migrating data objects.

According to a second aspect, there is provided a method of database cloud bursting a first instance of a database stored in a computing node, to a second instance of the database instantiated in a cloud computing node, the method comprising:
receiving, at the first instance, a request from the second instance for a data object, the request for the data object being sent on the basis of a request for the data object received at the second instance; and
in response to the request received at the first instance, sending from the first instance to the second instance a copy of the requested data object.

According to a third aspect, there is provided a cloud computing node for cloud bursting a first instance of a database to a second instance of the database instantiated in the cloud computing node, the first instance of a database being stored in a different computing node, the cloud computing node being configured to:
receive, at the second instance, a request for a data object;
determine whether a local copy of the requested data object is stored in the second instance;
in response to determining that a local copy of the requested data object is not stored in the second instance, send from the second instance to the first instance a request for the requested data object;
receive, at the second instance, a copy of the requested data object; and
store the copy of the requested data object in the second instance.

According to a fourth aspect, there is provided a non-transitory computer-readable storage medium comprising computer-executable instructions which, when executed by a processor, cause a computing device to perform a method of database cloud bursting a first instance of a database stored in a computing node, to a second instance of the database instantiated in a cloud computing node, the method comprising:
receiving, at the second instance, a request for a data object;
determining whether a local copy of the requested data object is stored in the second instance;
in response to determining that a local copy of the requested data object is not stored in the second instance, sending from the second instance to the first instance a request for the requested data object;
receiving, at the second instance, a copy of the requested data object; and
storing the copy of the requested data object in the second instance.

Further features and advantages of the invention will become apparent from the following description of preferred embodiments of the invention, given by way of example only, which is made with reference to the accompanying drawings.

### Brief Description of the Drawings

Figure 1 is a schematic diagram of a cloud computing node;
Figure 2 is a schematic diagram of a database schema;
Figure 3 is a schematic diagram of a cloud computing environment;
Figure 4 is a flow diagram illustrating a method of performing on-demand migration from a source cloud to a target cloud;
Figure 5 is a flow diagram illustrating a method of performing background migration from a source cloud to a target cloud; and
Figure 6 is a schematic diagram of a target instance of a database partially populated with data migrated from a source instance of a database.

### Detailed Description

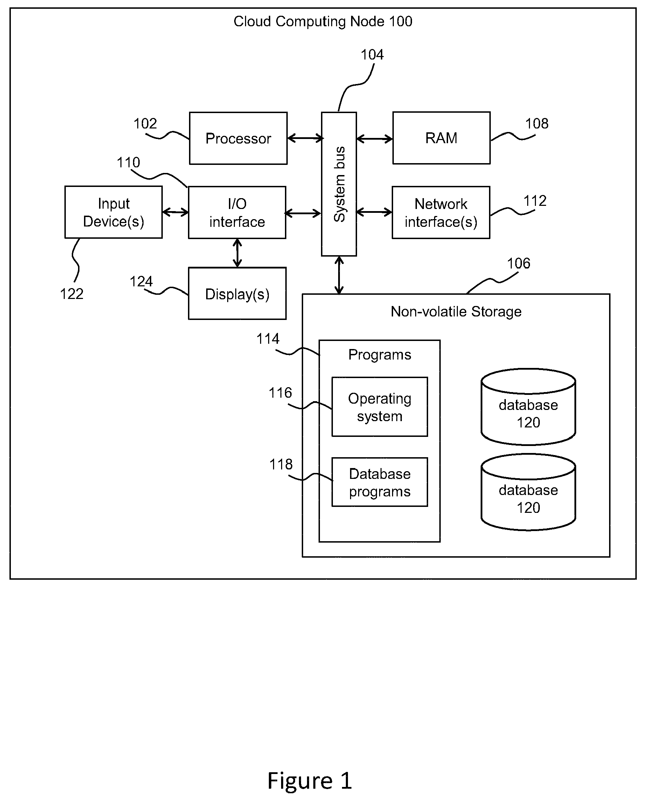

Figure 1 schematically illustrates the components of a cloud computing node 100, which is an exemplary computing device which databases may be migrated to and/or from in accordance with the methods disclosed herein and which is used to illustrate the features of the disclosed methods. The cloud computing node 100 is a device configurable to be used as a node in any cloud deployment model (as described in greater below below).

The cloud computing node 100 may take the form of a server, a personal computer, a thin client, a thick client, a handheld computer device, a Smartphone, a personal digital assistant (PDA), an e-reader, a tablet computer, a laptop computer device, a set top box, or any other suitable computing device. For brevity, the cloud computing node 100 is described with reference to a single computing device; however, it will be understood that the cloud computing node 100 may comprise multiple computing devices connected together with wired or wireless network connections.

The cloud computing node 100 includes a processor 102 that is able to transmit control messages to, receive status information from, and transmit data to and from components within the cloud computing node 100 that are connected to a system bus 104, where these components may include a non-volatile storage device 106, random access memory (RAM) 108, an input/output (I/O) interface 110, and network interface 112

The processor 102, which is typically a microprocessor, processes instructions stored in the RAM 108 that have been loaded from the non-volatile storage device 106, which could be for example a flash memory or a hard disk drive. These instructions are in the form of computer software in the form of one or more programs 114 including an operating system 116 and one or more utility programs for implementing database utilities, referred to hereinafter as database programs 118. The RAM 108 is also used by the programs 114 running on the processor 102 as a means of storing and accessing data in the form of electronic signals where the data is used during the execution of the programs 114. In some examples the processor may be arranged to implement an x86_64 instruction set.

The system bus 104 may be one or more of any of several types of bus structures, including an Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus.

The non-volatile storage 106 may include one or more of a magnetic disk drive, an optical disk drive, read-only memory, flash memory, ferroelectric RM, or any other suitable form of non-volatile storage. The non-volatile storage 106 may store the operating system and other programs and may store data in the form of one of more database instances 220.

The I/O interface 110 may be arranged to receive inputs from an operator of the cloud computing node via one or more input devices 122 and/or to output information via a user interface such as a display 124.

The network interface 112 allows programs 114 running on the processor 102 to transmit and receive data to and from a number of other devices and systems via a communications network or a plurality of such networks. The network interface 112 (or plurality of such interfaces) may be able to connect to the communications network via a wireless access node using one or more of a number of radio access technologies or via a wired technology such as a modem and/or an Ethernet card. The communications network and/or wireless access node may also provide access to the Internet.

The operating system 116 is computer software in the form of a program or set of programs whose instructions are loaded from non-volatile storage 106 by the processor 102 and executed when the cloud computing node 100 is activated. The operating system 116 may start further programs 114 such as database programs 118 and/or may allow an operator to start database programs 118, for example via a user interface provided by the operating system 116. The operating system 116 enables the sharing of the processing power provided by the processor 102 between the programs 114 running on the processor 102.

In some examples, the operating system 116 may be a guest operating system of a virtual machine run by a hypervisor program or virtual machine monitor.

The operating system 116 provides a programmatic interface for programs 114 running on the processor 102 allowing them to request functionality from the operating system 116. This programmatic interface may take the form of procedures, i.e. system calls, which a program 114 running on the processor 102 may use in order to invoke the operating system 116 and request it to provide desired functionality. In response to receiving a request for functionality, the operating system 116 may transmit control messages to, receive status information from, transmit data to and/or receive data from components (e.g. 106, 108, 110, 112) connected to the system bus 104 in order to provide the requested functionality, and may also return data to the requesting program 114 as a result.

The operating system 116 may provide a file system for storing, modifying, and accessing files or other data held in non-volatile storage 106, such as data held in the database instances 120. The file system may be accessible to other programs 114, such as database programs 118 running on the processor 102 via the programmatic interface provided by the operating system 116.

The database programs 118 running on the processor 102 can process requests for data obtained from the I/O interface 110 that receives user input from a user input device or devices 122, or can process requests for data received via the network interface 112.

The database 120 maintains an organized collection of information. One example of an organized collection of information is a user information repository. The database 120 may maintain user information that includes user preferences, user access, and other personal information. In other examples, the database 120 is configured to store any type of information in an organized format.

In one example, the database 120 may be a subscriber profile repository that maintains information related to mobile phone subscribers. The information maintained by the database 120 is organized into what is known as a "database schema." The database schema is the structure of the records, or entries, and tables that form the database. Using the example of a subscriber profile repository, each entry for a particular subscriber in the schema may include elements or "fields" for different categories of information, with each field having multiple possible values that can be associated with each subscriber. For instance, the fields may store data items or values including, but not limited to, the telephone number of the subscriber, the capabilities of the subscriber's telephone, the location of the subscriber, and the quality of service the subscriber pays for.

Various services may query the database 120 to retrieve information associated with a subscriber's profile, for example, to determine a subscriber's allowed network access. Queries may be made via the network interface 112 using the database program 118. The database 120 and the database program 118 may implement an application protocol for reading and writing the values over a network. One example of such a protocol is the Lightweight Directory Access Protocol (LDAP). LDAP entries are defined by a schema that governs the types of information that may be stored in the database 120. The information is stored in elements or fields known as "attributes." The schema determines which attributes may be used, the kinds of values that the attributes may have, and how other services may interact with the attributes.

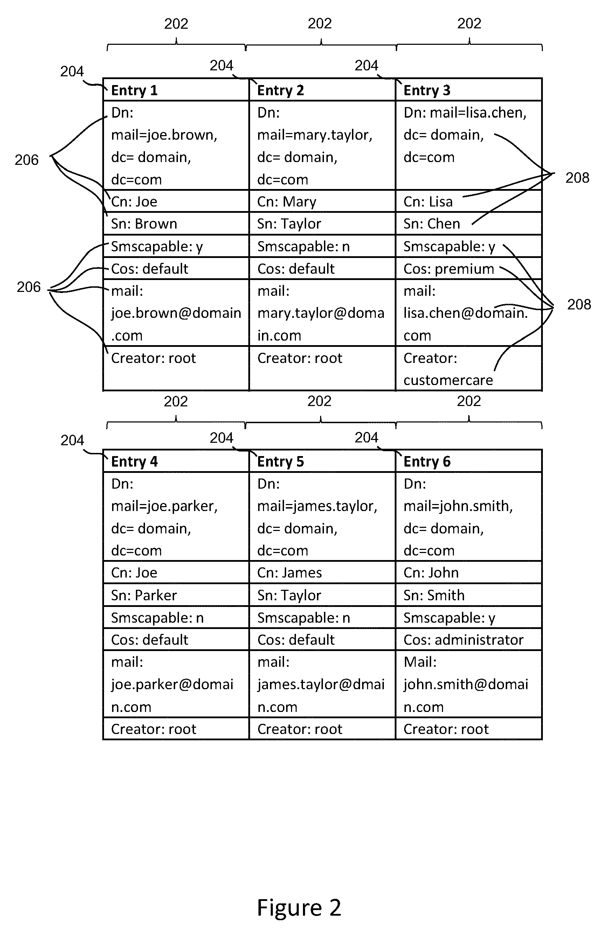

Figure 2 is a schematic block diagram illustrating one example of a schema 200. The illustrated schema 200 is an exemplary partial set of record entries 202 from an LDAP database schema; however, the methods described herein may be applied to any database 120 of organized information.

For purposes of illustration only six entries 202 are shown in figure 2 but it will be understood that such a database 120 may contain many entries 202. The database 120 is capable of maintaining any number of entries 202. Each entry 202 has an entry identifier 204. Each entry 202 contains any number of attributes 206 having various different values 208. For example, each entry 202 contains the attributes 206 "Dn" (distinguished name), "Cn" (given name), "Sn", (surname), "Smscapable" (whether the associated device is capable of sending/receiving SMS messages), "Cos" (class of service), "mail" (email address), and "Creator" (the creator of the entry 202). However, the values 208 corresponding to the attributes 206 vary across the entries 202.

Each attribute 206 has multiple possible values 208. For some attributes 206, for example Smscapable, the values 208 are one of a limited number of options, such as "y" (yes) or "n" (no). For other attributes 206, for example Cn and Sn, the number of possible values 208 is not limited due to the nature of the information stored (there is an unlimited possible variation in people's names); however, for these attributes 206 there may be some repetition of attribute/value combinations in the set of entries 202. The Dn attribute 206 is a key attribute 206, the value 208 of which uniquely identifies each entry 202 as mandated by the LDAP standards.

In many database environments, demand for resources is not uniform and may be subject to periodic, seasonal or random fluctuation. For example, in the case of a cellular network operator's subscriber profile database, Short Message Service (SMS) volumes may increase during holiday periods (to a peak rate of 100,000/sec, for example) but may be relatively stable at a lower volume (of 5,000/sec, for example) throughout the rest of the year.

One way to ensure that all requests to a database implemented in a private cloud are delivered properly is to provide in the private cloud dedicated resources available to handle the peak demand at all times. However, such resources would then be heavily underutilized for most of the time, when the demand is much lower than the peak demand.

In addition to the capital costs, adding computing resources to (and subsequently removing from) a private cloud is a time intensive activity that inhibits the flexibility and scalability of private clouds.

One solution is to maintain a private cloud with a lower level of resources to cope with peak levels of demand but high enough to cope with normal levels of demand. For example, a private cloud owner may maintain resources capable of coping with 10% of the peak demand. In order to handle peaks in demand exceeding the level that the resources available in the private cloud, the owner of the private cloud uses resources provided by one or more public clouds during periods of peak demand, and rely solely on the resources provided by the private cloud during periods when the demand is within the capability of the private cloud resources. This strategy, which is referred to herein as cloud bursting, enables the owner of the private cloud to maintain a database service that meets the demand for resources at all times but can reduce the cost of purchasing, maintaining and operating the additional hardware that would otherwise be needed to cope with peaks in demand.

Cloud bursting of databases however poses certain challenges. Using the conventional cloud bursting model, cloud bursting of a database instance needs to be completed before the cloud bursted database instance can receive queries. Otherwise, the cloud bursted database instance will be missing records that it may be asked to provide. This could be problematic if, for example in the case of a subscriber profile database, the cloud burst database instance cannot enable delivery of text messages because it does not have access to all valid phone numbers and their delivery addresses. As databases increase in size the challenges become more significant. At the present time, with a 50 MBPS internet connection, it would take approximately 15 hours to burst a 300 GB database. Such timescales place significant limitations on the rate at which database providers can react to changing demand using cloud bursting techniques. This is further compounded for databases that receive regular updates, additions and deletions, as the replication process required to update the records stored in the cloud bursted database instance also need to be migrated, further adding to the time taken to perform a cloud burst.

Generally, this problem is solved by keeping two identical copies of database: one in the private cloud and one in the public cloud. This requires a prior public cloud instance available and running, and connectivity between the private cloud and the public cloud so that the copy in the public cloud is always up to date and available for future use. However, maintaining a copy of the database in the public cloud is costly since the database owner must pay for the continued use of storage in the public cloud, even though the data stored in the public cloud is not being used to respond to queries.

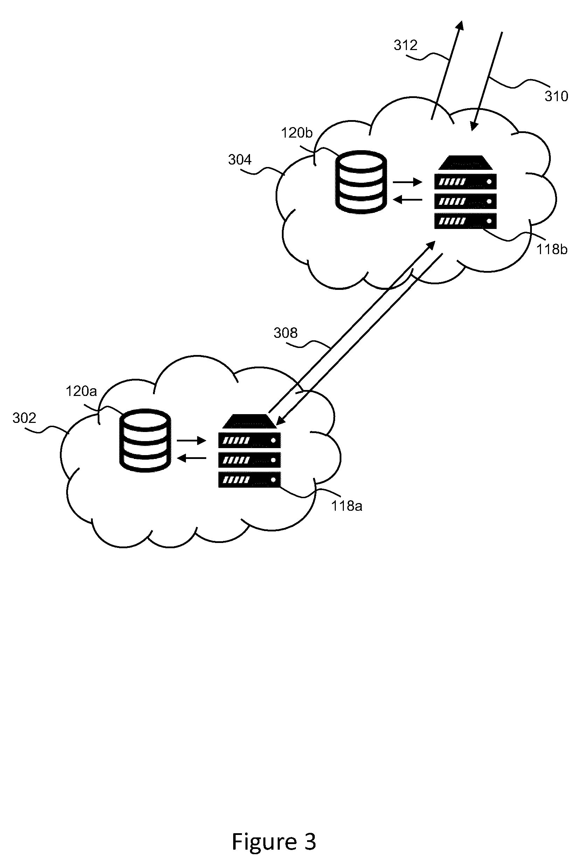

Figure 3 is a schematic illustration of a cloud computing environment 300 in which embodiments may be implemented. The cloud environment 300 includes a source cloud 302 and a target cloud 304. The source cloud 302 and the target cloud 304 each comprise one or more cloud computing nodes 100 as described above with reference to figure 1.

In the example depicted in figure 3, the source cloud 302 is a private cloud. The private cloud is cloud infrastructure operated for a single organization, which in this case is the owner of a database 120. The source cloud 302 may be hosted by the owner of the database or may be hosted by a third party on behalf of the owner of the database.

In the example depicted in figure 3, the target cloud is a public cloud. A public cloud is a cloud whose services are provided over a network and that is available open for public use (or at least a group including more than one organisation). Public cloud services may be provided by a public cloud service provider who owns and operates the cloud infrastructure (i.e. one or more cloud computing nodes 100). Access to the public cloud may be via a network such as the Internet or may be via a private connection to a peering point offered by the cloud service provider. Public cloud services may be free or offered on a pay-per-usage model.

The source cloud 302 and the target cloud 304 together form a hybrid cloud composed of a private cloud and a public cloud. The source cloud 302 and the target cloud 304 remain distinct cloud entities but are bound together by standard or proprietary technology that enables data and/or application portability between the clouds. The computing resources of the public target cloud 304 may be utilised to meet temporary resource needs that cannot be met by the private source cloud 302. This hybrid cloud therefore enables cloud bursting for augmenting the resources available to the source cloud 302.

Stored on the source cloud 302 is an instance of a database 120, hereinafter referred to as a source instance 120a. The source instance 120a includes a plurality of data objects in the form of database entries 202. The source instance 120a may be a master copy of the database 120 (i.e. the most up-to-date version of the database 120 including the latest changes to entries 202 in the database 120) or may be a duplicate instance of the database (i.e. not necessarily including the latest changes to entries 202 in the database 120).

When the owner of the source cloud 302 determines (for example, based on resource requirements) that the database 120 needs to be burst to a public cloud, such as the target cloud 304, a new database instance 120b, hereinafter referred to as the target instance 120b is instantiated in the target cloud 304. The target instance 120b may be a stock image of the software and construct of the database 120 (for example, the source instance 120a) started as a new node in the target cloud 304. This image may have just the software binaries and no data. The target instance 120b can be newly created or can a template image of the database 120 (a so-called golden image) can be reused. In any event, the target instance 120b does not require any data or state that is present in the source instance 120a to be maintained.

The owner of the source cloud 302 may be, for example, a telecommunications network operator. The network operator may determine that the resources in the source cloud 302 are, or are likely to be insufficient to provide a predetermined level of service and may initiate a cloud burst of the database 120 based on that determination. For example, the network operator may employ a network load balancer that monitors an incoming volume of requests. The load balancer may direct requests to the source cloud 302 when the volume of requests are below a predetermined threshold. When volume of requests exceeds a predetermined threshold, the load balancer may be configured to initiate instantiation of the target instance 120b and to direct requests to the target cloud 304.

When the target instance 120b is instantiated it does not contain all of the entries 202 that are stored in the source instance 120a. In some examples, the target instance 120b may contain only a small fraction of the entries 202 stored in the source instance 120a upon initialisation. In some examples, the target instance 120b contains no entries 202 upon initialisation. In any event there are far fewer entries 202 in the target instance 120b upon initialisation than there are in the source instance 120a.

During or shortly following initialisation, the target instance 120b establishes a connection 308 to the source instance 120a. The connection 308 may be, for example, via the internet. The connection 308 may be established using, for example the Lightweight Directory Access Protocol (LDAP) or any other suitable protocol. Once the connection 308 is established, despite the target instance 120b containing an incomplete set of records (with respect to the source instance 120a), the target instance 120b in the public target cloud 304 is able to receive requests 310 for data objects in the form of database entries 202 and issue responses 312 to the requests 310. If the target instance 120b receives a request for a data object that is not yet stored locally at the target instance 120b, the target instance 120b sends a request for that requested data object to the source instance 120b over the connection 308. The target instance 120b receives the requested data object from the source instance 120b over the connection 308, stores a local copy of the requested data object and issues a response to the request for that data object. This enables near-instant cloud bursting of the database 120 without having to wait for the entire contents of the source instance 120a to be migrated to the target instance 120b, which might take hours or even days. The target instance 120b can therefore be deployed quickly in response to an established need for additional resources without the need for any prior set-up, which enables the database 120 in a more responsive and cost efficient way. Over time, by the methods described herein, the target instance 120b will be populated with the data entries 202 stored in the source instance 120a.

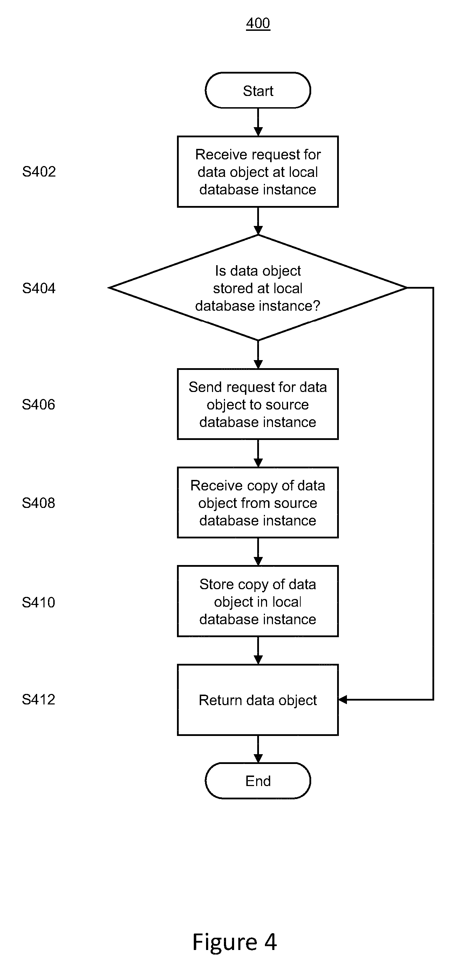

Figure 4 depicts a method by which the target instance 120b may respond to requests for data once it is instantiated in the target cloud 304. This method and its variations are referred to herein as on-demand migration 400.

At step S402, a request for a data object (i.e. an entry 202 in the database 120) is received and processed by a database program 118b running in the target cloud 304.

At step S404, the database program 118b running in the target cloud 304 determines whether the requested entry 202 is stored at the target instance 120b. As described above with reference to figure 3, shortly after the cloud bursting has been initiated, the newly instantiated target instance 120b will have very few (if any) database entries 202.

If the database program 118b determines that the requested entry 202 is not stored in the target instance 120b, the database program 118b initiates a lookup of the entry 202 at the source instance 120a, via the connection 308.

At step S406, the database program 118b sends a request for the entry 202 to the source instance 120a (or to a database program 118a running in the source cloud 302).

At step S408, following transmission of the request for the entry 202, the database program 118b running at the target instance 120b receives a copy of the requested entry 202 from the source instance 120a (or from the database program 118a running in the source cloud 302).

At step S410, the database program 118b running in the target cloud 304 stores a copy of the entry 202 in the target instance 120b. Steps S406 to S410 are therefore equivalent to an on-demand single database entry migration performed in response to a request for that entry 202 received at the target instance 120b.

At step S412, which may be performed after, before, or in parallel with, step S410, the database program 118b running in the target cloud 304 returns the data entry 202 to the requester of that entry 202.

Returning to step S404, if the database program 118b determines that the requested entry 202 is stored in the target instance 120b, the database program 118b proceeds to step S412 and returns the data entry 202 to the requester of that entry 202.

Over time, the target instance 120b is populated with data entries 202 as and when requests for those data objects are received by at the target cloud 304. In many database implementations, it is common for the majority of requests to relate to a minority of database entries 202. So, for example, 80% of requests may relate to approximately 20% of the entries 202 stored in the database 120. Therefore, in such implementations the above method works particularly well since migration of entries 202 that are most frequently requested is prioritized over the majority of entries 202 that are infrequently accessed.

Since not all of the entries 202 stored in the source instance 120a are stored in the target instance 120b following initialization of the target instance 120b, the database program 118b running in the target cloud may be configured to only return entries 202 in response to requests for single entries 202. The database program 118b may be configured to deny multi-object requests. For example, requests comprising queries of all entries 202 satisfying a particular search criteria may be refused. In response to such queries an error message may be returned to the requester. This prevents an incomplete list of entries 202 being provided to the requester in cases where the list would be incomplete because the target instance 120b does not contain a complete set of entries 202 (with respect to the source instance). In some examples, the database program 118b may be configured to begin processing multi-object requests once the target instance 120b is fully populated. In some examples, multi-object requests may be passed to the database program 118a running in the source cloud 302 when the target instance 120b is not fully populated.

In some examples, database entries 202 may include data that is linked or in some way dependent on another entry 202 in the database. For example, in some examples the database 120 may have a tree structure with a root value (referred to herein as a parent value) and sub-trees of so-called children. In the event that one entry 202 with a dependency on another entry 202 is migrated, but the other entry 202 is not yet migrated, the database program 118b running in target cloud 302 may be configured to include a 'dummy' placeholder data item in the target instance 120b in place of the missing, linked, data. The database program 118b running in target cloud 302 may be configured such that when a database entry 202 including a placeholder data item is requested, the actual database entry 202 from the source instance 120a is migrated to the target instance 120b so that the target instance 120b can return the actual data requested rather than the placeholder data, and be available in the target instance 120b for future requests.

In some embodiments, once the target instance 120b has been instantiated in the target cloud 304, a parallel migration of all entries 202 from the source instance 120a to the target instance 120b may be initiated in parallel to the on-demand migration 400 of single entries 202 described above in relation to figure 4. For example, entries 202 may be copied via the connection 308 between the source cloud 302 and the target cloud 304 in batches. This parallel migration is referred to herein as a background migration.

The background migration of database entries 202 enables the source instance 120a to be fully migrated to the target instance 120b in a finite amount of time.

In some examples, the database program 118a running in source cloud 302 may initiate the background migration of entries 202 from the source instance 120a to the target instance 120b. In some examples, the database program 118a running in the source cloud 302 may push the entries 202 to the target cloud 304.

In other examples, the database program 118b running in the target cloud 302 may initiate background migration of entries 202 from the source instance 120a to the target instance 120b. In some examples, the database program 118b running in the target cloud 302 may pull the entries 202 from the source cloud 302.

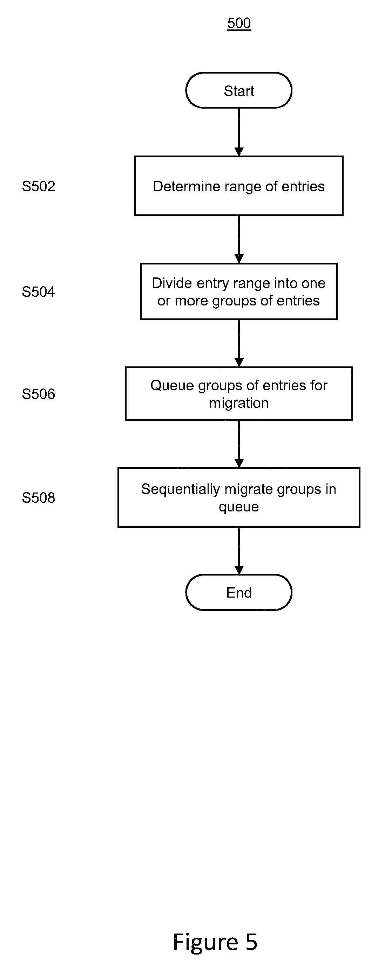

Figure 5 shows an exemplary method of background migration 500 by which entries 202 from the source instance 120a may be migrated to the target instance 120b. In particular, in the method of background migration 500 shown in figure 5, the database program 118b running in the target cloud 304 runs a configurable number of threads to read entries 202 from the source instance 120a and create corresponding entries 202 in the target instance 120b.

At step S502, the database program 118b determines a range of entries 202 in the source instance 120a i.e. the number of entries 202 to be migrated from the source instance 120a to the target instance 120b. This may be done, for example, by reading an entry identifier 204 of the first entry 202 in the source instance 120a and reading an entry identifier 204 for the last entry 202 in the source instance 120a and determining a difference between indexes associated with the first and last entry identifiers 204. In examples where the source instance 120a is not the master instance of the database 120, the first and last entry identifiers 204 may instead be read from the master instance of the database 120 to ensure that the most up-to-date range is determined (for example, where the last entry 202 in the master instance of the database 120 has not been migrated to another instance acting as the source instance 120a).

At step S504, the database program 118b divides the entry range into one or more migration tasks each comprising a group of entries 202 to be migrated. For example, the range of entries 202 may be divided into groups of 100 entries 202.

At step S506, the database program 118b creates a queue of the migration tasks. For example, the tasks may be queued in order from the task including the entry 202 with the lowest value entry identifier 204 to the task including the entry 202 having the highest value entry identifier 204. Alternatively, the tasks may be queued in order from the task including the entry 202 with the highest value entry identifier 204 to the task including the entry 202 having the lowest value entry identifier 204. Alternatively, the tasks may be randomly, or pseudo-randomly queued.

The background migration may be a multi-thread transfer of data from the source cloud 302 to the target cloud 304. For example, the background migration may include a first thread which migrates entries 202 starting from a group including the entry 202 with the lowest value entry identifier 204 with tasks queued in order from the task including the entry 202 with the lowest value entry identifier 204 and working towards the task including the entry 202 having the highest value entry identifier 204, and a second thread which migrates entries 202 starting from a group including the entry 202 with the highest value entry identifier 204 with tasks queued in order from the task including the entry 202 with the highest value entry identifier 204 and working towards the task including the entry 202 having the lowest value entry identifier 204. Migrating the database 120 using multiple threads in parallel enables the background migration to be completed in less time than a single thread migration.

In some examples the number of threads may be configurable.

At step S508, the database program 118b begins to perform the migration tasks sequentially in the order that they are queued. For example, the database program 118b may begin to read the entries 202 grouped into the first task in order of entry identifier 204 and store a copy of each entry 202 in the target instance 120b. Once all of the entries 202 grouped in the first task have been read and stored in the target instance 120b, the database program 118b may move to the next queued task. The database program 118b may then begin to read the entries 202 grouped into the next task in order of entry identifier 204 and store a copy of each entry 202 in the target instance 120b.

In some examples, the target instance 120b includes an attribute 206 relating to the current state of the migration process, hereinafter referred to as a migration status attribute. The database program 118b running in the target cloud 304 may periodically update the migration status attribute. For example, the migration status attribute may relate to an entry identifier 204 of the last entry 202, or group of entries 202, to be migrated. The database program 118b may use the migration status attribute, for example, in the event that the source instance 120a or the target instance 120b crashes, the connection 308 is broken, or for any other reason that the migration process is interrupted. For example, when the migration process is restarted, the method 500 may continue from the entry 202, or group of entries 202, identified by the migration status attribute.

Upon completion of the parallel migration method 500, the migration status attribute may be updated to reflect that all entries 202 have been migrated; i.e. that the target instance 120b contains all of the entries 202 that are stored in the source instance 120a. In some examples, the database program 118b may be arranged to respond to multi-object requests when the migration status attribute indicates that the migration to the target cloud 304 is complete.

In some examples, the database program 118b may be configurable to disable the parallel migration of all entries 202, so that the target instance 120b only contains entries 202 that have been migrated in response to a request for those entries 202 and therefore forms a cache server representing the requested entries 202.

The database program 118b may be configured to ensure that the entries 202 in the target instance 120b are kept up-to-date with respect to the source instance 120a and (where the source instance 120a is not the master instance of the database 120) the master instance of the database 120. Such a process is referred to herein as a replication process.

The master instance of the database 120 (which may be the source instance 120a) may record changes to the database 120. The changes may, for example, include inserts, updates, and deletions of entries 202, which may be recorded in a set of database "history" tables. The history table or multiple history tables may contain several records. Each record represents a change made to the database. These records are referred to herein as change logs. Logging all changes to the entries 202, enables the owner of the database 120 to determine how entries 202 in the database 120 were modified over time and/or who made the modifications. The change logs may include logs of new entries 202 added to the database 120 (referred to hereinafter as "add change logs") and logs of modifications to entries 202 in the database 120 (hereinafter referred to as "modify change logs").

In order to keep the target instance 120a up-to-date, the replication process is performed by the database program 118b, in which for example the database program 118b reads and apples the change logs stored in the master instance of the database 120 (or any source instance 120a that can be verified as up-to-date). In particular, the replication process may be performed repeatedly in replication process cycles, each cycle implementing change logs that have been added since initiation of the previous replication process cycle.

Entries 202 in the target instance 120b may be read from a source instance 120a that is the master instance of the database 120 (i.e. that in which the entries are fully up-to-date) or from a source instance 120a that is itself a migrated instance of the database 120. The target instance 120b may read entries from whichever source is able to return results more quickly so that the time taken to migrate entries 202 is minimised. The change logs are in general read from the master instance of the database 120 to ensure that all of the latest updates are reproduced in the target instance 120b.

In some examples, the database program 118b running in the target cloud 304 may be arranged to transmit to the master instance of the database 120 (and/or to the source instance 120a) a message indicating that it has read and applied all the updates indicated in the change logs. The database program 118b running in the target cloud 304 may be arranged to transmit a message indicating that one or more change logs could not be read and applied, or were not properly received. This enables the target instance 120b to re-read, or the source instance 120a to resend, the relevant change logs.

In some examples, the replication process is performed in parallel with the on-demand migration process described above with reference to figure 4 and/or in parallel with the background migration process described above with reference to figure 5. The replication process may be configured to prevent race conditions and ensure that the target instance 120b converges with the source instance 120a (and by extension the master instance of the database 120).

If the on-demand migration process, background migration process, and replication process are not properly coordinated, it is possible to create a target instance 120b that does not converge on the source instance and/or master instance of the database 120. For example, the source instance 120a may contain an entry 202, and the master instance of the database 120 may contain a modify change log relating to the entry 202. In the event that the database program running in the target cloud 118b reads the modify change log (via the replication process) prior to reading the entry 202 and creating a corresponding entry in the target instance 120b (either via on-demand migration or background migration), the database program 118b will be unable to apply the change to the entry 202 in the target instance 120b (since it does not yet exist). In some implementations, the change may then be lost and the target instance 120b will not be able to converge with the source instance 120a or the master instance of the database 120.

In order to prevent such non-convergence between the target instance 120b and the source instance 120a (and/or the master instance of the database 120), the replication process may be performed in two parallel operations. The first replication operation, referred to herein as the primary replication process, is restricted to entries 202 that have already been migrated via background migration prior to initiation of a given primary replication process cycle. The second replication operation, referred to herein as a running in parallel to the primary replication process cycle, applies change logs corresponding to entries that have been added since initiation of a given primary replication process cycle.

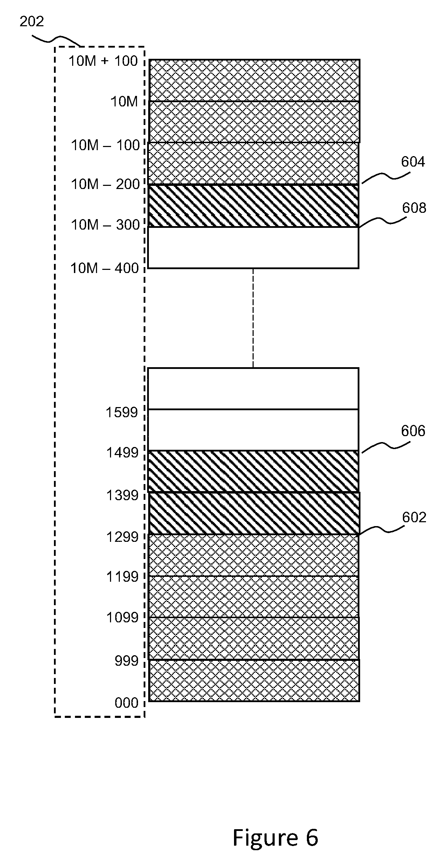

Figure 6 is a schematic diagram depicting a target instance 120b that has been partly populated by the background migration process. In the example depicted in figure 6, the target instance 120b is being populated by two background migration thread, one starting a rising background migration from the lowest value entry identifier 204 and one starting a falling background migration from the highest value entry identifier 204.

At the point in the background migration process depicted in figure 6, entries 202 with entry identifiers 000 to 1299 and entries 10M - 200 to 10M + 100 have been migrated by the two-thread background migration prior to a current primary replication process cycle. These entries are identified with a double cross-hatch. The entry identifier 204 "1299" represents a background migration rising mark 602 and the entry identifier 204 "10M - 200" represents a background migration falling mark 604. The background migration rising and falling marks 602, 604 may be stored in an attribute 206 in the target instance 120b, for example.

The primary replication process is only applied to entries 202 having entry identifiers with a value below the value of the rising mark 602 or above the value of the falling mark 604. This ensures that only data entries 202 that have been migrated to the target instance 120b are subjected to the primary replication process, and minimises the number of failed attempts at applying modify change logs (to entries 202 that have yet to be migrated to the target cloud 204).

However, in the time taken to perform one primary replication process cycle, typically multiple background migration tasks may be completed.

For example, at the point depicted in figure 6, since initiation of the current primary replication cycle entries 202 entry identifiers 204 1300 to 1499 and 10M - 299 to 10M - 200 have been migrated via the two-thread background migration since initiation of the current primary replication cycle. These entries are identified with a single cross-hatch. The entry identifier 204 "1499" represents a new background migration rising mark 606 and the entry identifier 204 "10M - 300" represents a new background migration falling mark 606. The new background migration rising and falling marks 606, 608 may also be stored in an attribute 206 in the target instance 120b, for example. In order to minimise the time that newly migrated entries 202 remain in the target instance 120b without being updated by a replication process, and to minimise the number of updates required in subsequent primary replication process cycles, the database program 118b may be configured to perform the secondary replication process for entries 202 having entry identifiers 204 between the rising mark 602 and the new rising mark 606 and between the falling mark 604 and the new falling mark 608.

In some examples, the database program 118b may determine that the background migration is complete when, for example, the rising mark 602 meets the falling mark 604 (or the indexes are adjacent values). In response to determining that the background migration is complete, the database program 118b may suspend the secondary replication process cycles and only subsequently perform primary replication processes.

One alternative approach to ensuring that the target instance 120b ultimately converges with the source instance 120a and the master instance of the database 120, is to create a database of failed change logs (i.e. change logs that have been applied but for which no entry 120 exists in the target instance 120b). Prior to performing a replication process cycle the database program 118b may apply changes stored in the database of failed change logs to apply changes that failed in the previous replication cycle. Changes from the database of failed change logs that are successfully applied are deleted; those that fail again are maintained in the database of failed change logs. Once the changes in the database of failed change logs are applied, the replication process continues. This ensures that change logs are applied in the correct order.

In another alternative approach to ensuring that the target instance 120b ultimately converges with the source instance 120a and the master instance of the database 120, in response to a change log failing, the database program 118b may be configured to perform an on-demand migration of the relevant entry 202 and then reattempt to apply the change log.

In some examples, the database program 118b may be configured to resolve conflicts between entries 202 that have been migrated to the target cloud 304 in response to a request (via on-demand migration), and entries 202 that are migrated via the background migration.

For example, when performing the background migration process, the database program 118b may attempt to migrate a data entry 202 that was previously migrated in an on-demand migration in response to a request received at the target instance 304. For example, the database program 118b may detect that an entry 202 in a tasked group already exists in the target instance 120b.

In response to detecting that an entry 202 that is to be migrated from the source instance 120a to the target instance 120b already exists in the target instance 120b, the database program 1186 may be configured to forego migration of the entry 202 from the source instance 120a to the target instance 120b in favor of the version of the entry 202 already stored in the target instance 120b. The reason for this is that, unless the source instance 120 is also the master instance of the database 120 (or at least is up-to-date with changes to the master instance of the database 120), the version of the entry 202 stored in the source instance 120a may not include all changes, whereas changes from the modify change log stored in the master instance of the database 120 may have been applied to the entry 202 migrated to the target instance 120b in response to a request. Therefore, if the entry 202 stored in the target instance 120b were to be replaced by a version of the entry 202 stored in the source instance 120a, changes may be lost.

The database program 118b, during the replication process described above, may detect that an entry 202 defined in an add change log already exists in the target instance 120b.

In some examples, the database program 118b may be configured to replace the existing entry 202 with the entry defined in the add change log; although this may replace the existing entry 202 with an older version of the entry 202, the entry 202 should be brought up-to-date later in the replication process by applying subsequent modify change logs.

However, in some examples, in response to determining that an entry 202 defined in an add change log already exists in the target instance 120b, the database program 118b may forego application of the add change log in favor of the existing entry 202.

A race condition may be encountered if, in response to a request the database program 118b determines, at step S404, that the requested entry 202 is not stored in the target instance 120b (and may subsequently attempt to follow steps S406 to S410 of the on-demand migration process) and in the meantime the entry 202 is migrated to the target instance 120b by the background migration process. The database program 118b may be configured to detect that the entry 202 has been migrated to the target instance 120b since determining that the entry 202 is not stored (at step 404) and in response to that detection may be configured to forego storing a copy of the entry 202 (at step S410) in favor of the version of the entry 202 stored in the target instance 120b in the interim.

The methods described above may be implemented in any database system irrespective of the language used to implement the database. The methods may be implemented in a Structured Query Language (SQL) database or a database implemented in a non-SQL database language. For example, the methods may be applied to, for example, SQL databases such as MySQL, Berkeley DB, VoltDB, and Oracle or non-SQL databases such as Cassandra, MongoDB and BerkeleyDB.

The above embodiments are to be understood as illustrative examples of the invention. Further embodiments of the invention are envisaged. For example, although the above examples are described with reference to private and public clouds, other cloud deployment models are envisaged. For example, rather than burst a database instance from a private cloud to a public cloud, a cloud burst to a community cloud in which the cloud infrastructure is shared by several organizations may be performed. Such community clouds may for example supports a specific community that has shared interests and may be managed by the owner of the database or by a third party and may exist on-premises or off-premises. Furthermore, although cloud bursts are described above as originating from a private cloud, it will be understood that the source instance may be stored in any computing node. For example, the source instance may be stored in a data centre or in another public cloud.

It will be understood that although the above methods are described with respect to a single source cloud and a single target cloud i.e. each cloud being a single entity, it will be understood that each cloud be provided by a distributed set of machines that are running at different locations, while still connected to a single network or hub service. For example, the source cloud and target cloud may each be an intercloud, or a multicloud.

Although in the above examples migration between the source cloud and the target cloud is described with reference to a single connection it will be understood that there may be multiple such connections between the source cloud and the target cloud. In some examples, on-demand migration may utilise a pool of LDAP connections between the source cloud and the target cloud. In some examples, background migration may use a dedicated LDAP connection between the source cloud and the target cloud.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of cloud bursting a first instance of a database stored in a computing node, to a second instance of the database instantiated in a cloud computing node, the method comprising:
receiving, at the second instance, a request for a data object;
determining whether a local copy of the requested data object is stored in the second instance;
in response to determining that a local copy of the requested data object is not stored in the second instance, sending from the second instance to the first instance a request for the requested data object;
receiving, at the second instance, a copy of the requested data object; and
storing the copy of the requested data object in the second instance.

2. A method according to claim 1, comprising receiving, at the second instance, copies of data objects for which no request has been received.

3. A method according to claim 2, wherein the first instance comprises a plurality of data objects and the method comprises migrating the plurality of data entries stored in the first instance to the second instance.

4. A method according to claim 3, comprising:
determining a range of database entries, the range of database entries corresponding to the number of entries in the database;
dividing the range of database entries into one or more groups of entries;
assigning the one or more groups of entries to a queue, the queue corresponding to an order in which the groups are to be migrated;
migrating the groups in the order in which they are queued.

5. A method according to claim 4, wherein each database entry has an associated entry identifier.

6. A method according to claim 5, wherein the range of database entries is determined on the basis of the highest and lowest values of entry identifier and/or the groups are assigned to the queue on the basis of an identifier of one or more entries in the respective groups.

7. A method according to any of claim 3 to claim 6, comprising storing at the first instance a record indicating which of the plurality of database objects have been migrated.

8. A method according to any of claim 3 to claim 7, comprising initiating a plurality of parallel migration processes.

9. A method according to any preceding claim, comprising:
retrieving one or more change logs, the change logs relating to changes and/or additions to the plurality of data objects; and
applying changes to the data objects stored at the second instance on the basis of the change logs.

10. A method according to any preceding claim, wherein the computing node is a private cloud and/or the cloud computing node is a public cloud.

11. A method according to any preceding claim, comprising receiving at the cloud computing node a request to instantiate the second instance of the database.

12. A method according to claim 11, wherein the request to instantiate is sent on the basis of a determination that the computing node has insufficient resources.

13. A method of database cloud bursting a first instance of a database stored in a computing node, to a second instance of the database instantiated in a cloud computing node, the method comprising:
receiving, at the first instance, a request from the second instance for a data object, the request for the data object being sent on the basis of a request for the data object received at the second instance; and
in response to the request received at the first instance, sending from the first instance to the second instance a copy of the requested data object.

14. A cloud computing node configured to perform a method according to any of claim 1 to claim 12.

15. A computing node configured to perform a method according to claim 13.

16. A computer program which, when executed by a processor, causes the processor to perform a method according to any of claim 1 to claim 13.
